# EUROPEAN PATENT SPECIFICATION

(11) **EP 4 173 786 B1**
(45) Date of publication and mention of the grant of the patent: **28.01.2026**
(21) Application number: 22203168.4
(22) Date of filing: 24.10.2022
(51) Int. Cl.: B27M 1/08, B27C 5/02, B27C 5/06

(54) **IMPROVED WORKING CENTER AND OPERATING METHOD THEREOF**
VERBESSERTES ARBEITSZENTRUM UND BETRIEBSVERFAHREN DAFÜR
CENTRE DE TRAVAIL AMÉLIORÉ ET SON PROCÉDÉ DE FONCTIONNEMENT

(30) Priority: 26.10.2021 IT 202100027398
(43) Date of publication of application: 03.05.2023
(73) Proprietor: SCM GROUP S.P.A., 47921 Rimini (IT)
(72) Inventor: BALDUCCI, Andrea, 47921 RIMINI (IT)
(74) Representative: Tiburzi, Andrea

(56) References cited:
- WO-A1-2015/185351

## Description

The present invention relates to a working center for working panels according to the preamble of claim 1. Such a working center is known from the document WO 2015/185351 A1.

The present invention also relates to an operating method of said improved work center.

In more detail, the invention relates to a working center of the above type, designed and realized in particular to carry out *nesting* through machining, in order to obtain a plurality of pieces of different sizes, starting from a single piece, using a tool, such as for example a disc or shaped blade, cylindrical or shaped cutters, and the like.

### Technical field

As is well known, there are currently work centers provided with a base and a work surface, to which a replaceable work surface layer, or martyr panel, is coupled.

By replaceable working plane layer, it is meant a continuous surface, made up of one or more panels, used for passing through machining in the vertical direction, i.e. orthogonal to the surface itself, or oblique, to make inclined cuts, provided with means for fixing the piece to be work, generally a vacuum system.

The replaceable working planes are designed to avoid damaging the underlying working plane, made of metallic material, and therefore to be worn out during the machining performed on the panel to be machined.

The replaceable working plane is connected to the underlying working plane by screws or other fastening systems. The working plane is also provided with a plurality of openings, connected to a vacuum generation system, which transmits the vacuum to the replaceable working plane that is made of transpiring material and thus allows the workpiece to adhere to work on the replaceable working plane itself.

For correct machining of the workpiece, it is necessary that it adheres to the replaceable work surface at least for most of its surface.

In particular, during through machining, the replaceable work plane is worn by the tool along a path outlined by the cutting scheme of the machining itself.

The execution of each cutting scheme, therefore, wears and affects the replaceable working plane in different portions, decreasing the adhesion surface of the panel to be worked on to the replaceable working plane; to guarantee the adhesion of the panel to be worked on to the replaceable working plane, therefore, it is necessary to carry out periodic leveling of the replaceable working plane, also to eliminate the portions engraved in the previous machining, and thus allow the perfect transmission of the vacuum to the piece to be worked.

During the leveling, a tool reduces the thickness of the replaceable working plane, so as to once again obtain a uniformly planar surface, without incisions, on which to rest and adhere the panel to be worked.

Each leveling, therefore, reduces the thickness of the replaceable working plane.

For example, the thickness of the replaceable working plane is initially 18 mm, and at the limit of wear, it reaches a thickness of 8 mm.

When the replaceable working plane has been leveled enough times that its thickness is too thin, it must be replaced with a new replaceable working plane.

To date, the frequency of the leveling and the frequency of replacement of said replaceable working plane are determined by an operator, based solely on his own visual judgment of the state of wear of the replaceable working plane and on his own experience.

In particular, to date, the execution of cutting schemes continues until the wear of the replaceable working plane is such as to compromise the stability of the panel to be worked.

An obvious disadvantage of this solution is the possibility that it may be necessary to level or replace the replaceable working plane during the execution of a process, which would cause the interruption of the machining and therefore a considerable increase in times, even exceeding thirty minutes. and therefore of processing costs.

Another disadvantage is given by the fact that the panel to be machined can move during the working, due to the wear of the replaceable working plane.

Leveling and replacement of the replaceable working plane at fixed periodic intervals are also envisaged, i.e., which do not take into account the effective state of wear of the replaceable working plane.

An evident drawback of this solution is the possibility that the replaceable working plane is leveled in advance, resulting in higher operating costs for the work center and longer machining times.

It is also possible that the replaceable working plane is leveled late, compromising the adhesion of the panel to be worked on to the surface itself and therefore the quality of the work, since the worked pieces are damaged or cut incorrectly.

WO 2015/185351 is representative of the available art.

### Scope of the invention

In light of the above, it is, therefore, an object of the present invention to provide a work center provided with a replaceable working plane whose leveling and replacement are optimized, in accordance with claim 1.

Another object of the present invention is to provide a method capable of optimizing the replacement of the replaceable working plane, in accordance with claim 12.

### Object of the invention

It is, therefore, object of the present invention a working center for working panels made of wood, ceramic, plastic, glass, fiberglass and the like, comprising at least one replaceable working plane, a storage unit, in which one or more reference thresholds relating to the state of wear of said replaceable working plane are stored, and cutting schemes to be carried out on said panels, a logic control unit operatively connected to said storage unit, said working center being characterized in that said logic control unit is capable of acquiring data relating to the actual state of wear of said replaceable working plane, calculating the worn surface through machining of said replaceable working plane and the location space on said replaceable working place of the worn portions according to said acquired data, comparing said calculated worn surface with said one or more stored reference thresholds, and emitting signals corresponding to said comparison.

Further according to the invention, said working center comprises a graphic interface, operatively connected to said logic control unit, and said logic control unit is capable of sending said signals corresponding to said comparison to said graphic interface (I), for displaying to an operator.

Still according to the invention, said data relating to the actual wear of said replaceable working plane comprise the number of cutting schemes carried out after levelling of said replaceable working plane.

Preferably according to the invention, said data relating to the actual wear of said replaceable working plane comprise the number of levelling carried out on said replaceable working plane, since said working plane was replaced.

Always according to the invention, said data relating to the actual wear of said replaceable working plane comprise the measurement of the worn surface of said replaceable working plane.

Further according to the invention, said working center comprises at least one optic device capable of carrying out an initial scan of said replaceable working plane and generating a corresponding three-dimensional reference map of said replaceable working plane, and carrying out periodic scans of said replaceable working surface and generating corresponding actual three-dimensional maps of said replaceable working plane.

Still according to the invention, said three-dimensional reference map and said three-dimensional actual maps are stored in said storage unit, and said logic control unit is capable of comparing said three-dimensional actual maps with said three-dimensional reference maps.

Preferably according to the invention, said working center comprises displaying means, such as a light bar, for displaying the calculated state of wear of said replaceable working plane.

Always according to the invention, said working center comprises a working unit for carrying out the working on said pieces, and said logic control unit is capable of sending said signals to said working unit for carrying out the levelling and/or the replacement of said replaceable working plane.

Further according to the invention, said working center comprises a moving device, and said logic control unit is capable of sending said signals to said moving device for carrying out the replacement of said replaceable working plane.

Still according to the invention, said storage unit is a cloud unit, that can be connected to said logic control unit by means of an Internet network.

It is further object of the present invention an operating method of a working center (C), comprising the following steps:
a. acquiring data on the actual state of wear of said replaceable working plane;
b. calculating the worn surface though machining of said replaceable working plane according to said data acquired in said step a. and the location space on said replaceable working plane of the worn portions;
c. comparing said worn surface calculated in said step b. with one or more stored reference thresholds;
d. emitting signals corresponding to said comparison carried out in said step b.
   Further according to the invention, said method comprises the following further step:
*e*. sending said one or more signals emitted in said step d. to said graphic interface for displaying to an operator.

Still according to the invention, said data relating to the actual wear of said replaceable working plane comprise the number of cutting schemes carried out after the leveling of said replaceable working plane.

Preferably according to the invention, said data relating to the actual wear of said replaceable working surface comprise the number of leveling carried out on said replaceable working surface.

Finally according to the invention, said data relating to the actual wear of said replaceable working surface comprise the measurement of the worn surface of said replaceable working plane.

### List of figures

The present invention will be now described, for illustrative but not limitative purposes, according to its preferred embodiments, with particular reference to the figures of the enclosed drawings, wherein:

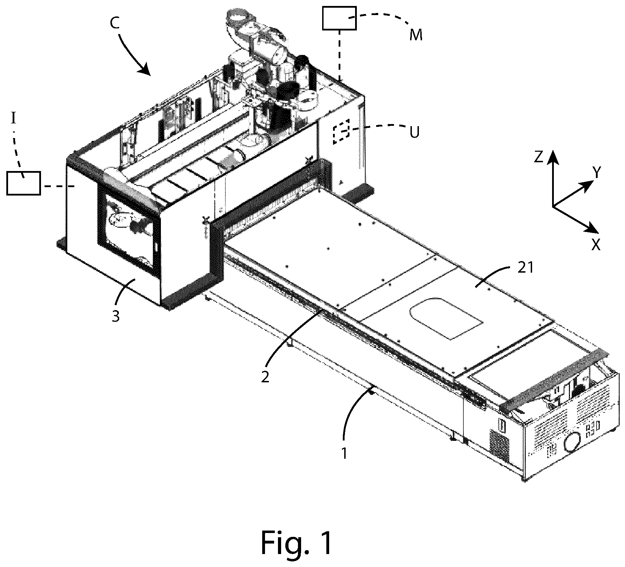

figure 1 shows an axonometric view of the work center object of the present invention.

### Detailed description of the figures

With reference to figure 1, the work center C for machining panels made of wood, ceramic, plastic, glass, fiberglass, and the like, provided with a replaceable work surface, object of the present invention, essentially comprises a base 1, through which said work center C rests on the ground, a working plane 2, for supporting the pieces to be machined, a working unit 3, equipped with workpiece machining tools, such as for example a blade disk, a logic control unit U, a memory unit M, and an interface I.

Said base 1 has an elongated shape, the main dimension of which extends according to a development direction parallel to a first X-axis.

Said working plane 2 is coupled to said base 1 and has an elongated shape, the main dimension of which extends in a development direction parallel to said first axis X, and lies in a plane XY, where Y is a second axis , orthogonal to said first axis X.

The working plane 2 comprises openings, not shown in the figure, connected to a vacuum system.

Said working plane 2 further comprises at least one replaceable working plane 21, which develops in a direction parallel to said first axis X, coupled to said working plane by means of fastening means, such as, for example, screws.

Said replaceable working plane 21 is porous and composed of one or more coplanar replaceable worktops, or martyr panels.

Said replaceable working plane 21 is capable of supporting one or more panels to be worked; the porosity of the replaceable working plane 21, in fact, allows the vacuum system to generate a negative pressure on the panel to be worked, so as to make it adhere to the replaceable working plane 21 itself.

Said working unit 3 is slidably coupled to said base 1 to translate according to said first axis X.

Said working unit 3 comprises working tools, not shown in the figure, for machining said one or more panels to be worked resting on said working plane 2, as in particular a disc blade.

Said working unit 3 further comprises a working head, supported by a crosspiece, movable along one axis, two or three translation axes, and rotating with respect to one axis, two axes, or three rotation axes, capable of supporting and actuating related working tools. The working unit 3 is also covered by a protective casing.

Said working unit 3 is capable of leveling operations on said replaceable working plane 21.

Said memory unit M is capable of memorizing the cutting schemes to be performed on a panel to be worked, a plurality of information, and data provided by said control logic unit U.

Said control logic unit U is operatively connected to said memory unit M and to said interface I.

Said control logic unit U is able to perform operations to determine when it is necessary to carry out the leveling of said replaceable working plane 21.

Said control logic unit U is also capable of counting the number of leveling operations performed and of signaling the need to replace the replaceable working plane 21 when the sum of the leveling operations has reached a predetermined number.

A first operation that can be performed by said logic control unit U is the measurement of the frequency with which an operator carries out a leveling or replacement operation of said replaceable working plane 21.

In particular, said logic control unit U is capable of counting the number of cutting schemes performed between two flats and of calculating functions of these numbers.

For example, a function calculated by said control logic unit U is the average of the number of different cutting schemes performed on the worked panel.

A second operation that can be performed by said control logic unit U is the calculation of the surface of said replaceable working plane 21, which has been worn by through machining, and the determination of the spatial location on said replaceable working plane 21 of the worn portions, and to send these values to said memory unit M.

In particular, once the tool used and the cutting scheme is known, said logic control unit U is capable of calculating the surface of said replaceable working plane 21, which has been worn and the location space on said replaceable working plane 21 of the worn portions.

A further method of calculating the worn surface of the replaceable worktable 21 is as follows.

A two-dimensional square grid contained in the XY plane is associated with the replaceable working plane 21. A binary value 0 or 1 is associated with each cell of the grid, where 0 indicates a worn portion and 1 indicates a non-worn portion.

The calculation of the repetitions of 0 and 1 indicates the percentage of wear or less of the replaceable working plane 21.

Yet another way of calculating the worn surface of the replaceable working plane 21 is as follows.

The surface of the replaceable working plane 21 is shown in three-dimensional form.

The cutting schemes to be performed are projected onto the three-dimensional surface and the percentage of the surface consumed due to the execution of the cutting scheme is simulated.

Said control logic unit U is able to generate a first signal S', a second signal S", and a third signal S‴ following the execution of said operations, and to send them to said interface I.

Said interface I is capable of receiving said first signal S', second signal S" and third signal S‴ from said control logic unit U, and correspondingly displaying a smoothing signal T, a substitution signal Q, and a positioning signal V to a user.

Said control logic unit U is also able to generate a signal R following the execution of said operations and to send it to said working unit 3, which is able to directly carry out the leveling.

Said work center C can comprise a vision system or an optical device, such as for example a television camera, able to scan said replaceable working plane 21.

Said television camera can be arranged in different points of said work center C.

In particular, said video camera can be coupled to the working unit 3, so as to move integrally with it, or it can be coupled to said base 1, or alternatively it can consist of an aggregate, which can be coupled to the working unit similar to a tool.

Said video camera scans the replaceable working plane 21, as soon as the latter is fixed to the working plane 2, to create a three-dimensional reference map, and sends it to the control logic unit U.

Following a predetermined number of cutting schemes, the scan is repeated and the resulting three-dimensional map is sent to the control logic unit U.

The control logic unit U then compares the two three-dimensional maps to determine the state of wear of the replaceable work table 21.

The operation of the work center C provided with a replaceable working plane described above, proceeds as follows.

When it is intended to work one or more panels in wood, ceramic, plastic, metal, glass, fiberglass, and the like, a user positions them on said working plane 2.

In particular, the user positions said one or more panels to be worked on said replaceable working plane 21.

Said control logic unit U actuates said vacuum system, so as to secure said one or more panels to be worked on said replaceable working plane 21.

Said working unit 3 then performs the required machining operations on said one or more panels to be machined, according to a predetermined cutting scheme.

According to the invention, once the cutting scheme and the tools used are known, said control logic unit U calculates, according to the methods described above, the surface of said replaceable working plane 21, which has been worn by through machining and the spatial location on said replaceable working plane 21 of the worn portions.

Said control logic unit U stores in said memory unit M the value of worn surface and the spatial location of said surface on said at least one replaceable working plane 21.

Said control logic unit U also calculates and stores in said memory unit M the number of cutting schemes performed since the last leveling of said replaceable working plane 21 and the number of leveling performed on the same replaceable working plane 21.

When one intends to carry out a new cutting scheme, said logic control unit U updates the count of the number of cutting schemes performed since the last leveling.

Furthermore, said control logic unit U compares the spatial location of the previously worn surface with the surface which will be worn by the new cutting scheme, so as to exclude from the total count the portions, which have already been worn by previous cutting schemes.

When the worn surface value of said replaceable working plane 21 exceeds a predetermined threshold, said logic control unit U sends said first signal S^{'}to said interface I.

Alternatively, said logic control unit U can calculate the average of the number of cutting schemes performed between two levellings of said replaceable working plane 21, and updating the average at each new leveling operation.

When the number of cutting schemes reaches a value equal to the average calculated from the number of previously performed cutting schemes, said control logic unit U can then send said first signal S' to said interface I, so that face milling is performed automatically, by said working unit 3 of said replaceable working plane 21, upon activation by an operator.

Said interface I, therefore, shows a corresponding leveling signal T.

Said leveling signal T can be of a light, sound, or visual type, such as for example a light bar whose color filling increases until it reaches the state of wear of said replaceable working plane 21 such as to require a leveling operation.

Said light bar can also take on colors from green to yellow to red, in correspondence with the state of wear of the replaceable working plane 21.

For example, the light bar can be green in color, in correspondence with the intact replaceable working plane 21, yellow in color in correspondence with the replaceable working plane 21 worn out for 90%, and red colored when the replaceable surface 21 is completely worn out.

It is also possible for said interface I to show text messages to the operator in correspondence with the color of the light bar.

When said replaceable working plane 21 has been leveled for a predetermined number of times, such as to make it no longer suitable for machining, said control logic unit U sends said second signal S" to said interface I.

Said interface I, therefore, shows a corresponding replacement signal Q of said replaceable working plane 21, so that the manual or automatic replacement of said replaceable working plane 21 is performed.

The automatic replacement of said replaceable working plane 21 can be performed by an external handling device to said work center, or by a handling device, which can be coupled to said work center, particularly to said working unit 3.

Said handling device can be an anthropomorphic or Cartesian robot.

Said replacement signal Q can be of the light, sound, or visual type, such as for example a status bar, the filling of which increases until it reaches the state of wear of said replaceable working plane 21, so as to require a replacement operation, such as previously described.

When a specific portion of said replaceable working plane 21 is excessively worn, it is also possible that said control logic unit U sends said third signal S‴ to said interface I, so that the manual or automatic replacement of one or more portions of said replaceable working plane 21 is performed.

Said interface I then shows a location signal V to a user to indicate which portions of said worktop replaceable 21 are usable and which ones are no longer usable.

It is also possible that the control logic unit U sends said first S', second S", and third S‴ signal to said *cloud,* which in turn sends them to remote devices, such as for example *smartphones, tablets,* devices wearables, or integrated personal computers of the work center C.

Alternatively, when the worn surface value of said replaceable working plane 21 exceeds a predetermined threshold, said logic control unit U sends said signal R to said working unit 3.

Before switching, therefore, when the next panel is machined, said working unit 3 automatically performs a leveling operation of said at least one replaceable working plane 21.

It is also possible to set in said control logic unit U a predetermined thickness intervals of said replaceable working plane 21, in correspondence with which the leveling or replacements are to be carried out, mainly when said work center C is placed in line with other machines.

Finally, said control logic unit U can furthermore comprise a predictive algorithm, based for example on a neural network, which is initially manually trained, to recognize the conditions of said replaceable working plane 21, for which the smoothing and replacement operations are necessary, to then automatically send messages and/or signals to said interface I, whenever it is necessary to level or replace said replaceable working plane 21.

Said interface I can be a personal computer integrated into the work center C, or one *smartphone,* a *tablet,* a wearable device, or a combination of the above different devices, which communicate with said control logic unit U wirelessly.

Said memory unit M, can be a *cloud,* connected to the control logic unit U via an Internet network.

### Advantages

An obvious advantage of the present invention is the possibility of having a work center provided with a replaceable working plane whose levelling and replacement are optimized.

## Claims

1. Working center (C) for working panels made of wood, ceramic, plastic, glass, fiberglass and the like, comprising
at least one replaceable working plane (21),
a storage unit (M), in which one or more reference thresholds relating to the state of wear of said replaceable working plane are stored (21), and cutting schemes to be carried out on said panels,
a logic control unit (U) operatively connected to said storage unit (M), said working center (C) being **characterized in that** said logic control unit (U) is configured to:
acquire data relating to the actual state of wear of said replaceable working plane (21),
calculate the worn surface through machining of said replaceable working plane (21) and the spatial location on said replaceable working plane (21) of the worn portions according to said acquired data,
compare said calculated worn surface with said one or more stored reference thresholds, and
emit signals corresponding to said comparison.

2. Working center (C) according to the preceding claim, **characterized**
**in that** it comprises a graphic interface (I), operatively connected to said logic control unit (U), and
**in that** said logic control unit (U) is configured to send said signals corresponding to said comparison to said graphic interface (I), for displaying to an operator.

3. Working center (C) according to any one of the preceding claims, **characterized in that** said data relating to the actual wear of said replaceable working plane (21) comprise the number of cutting schemes carried out after levelling of said replaceable working plane (21).

4. Working center (C) according to any one of the preceding claims, **characterized in that** said data relating to the actual wear of said replaceable working plane (21) comprise the number of levelling carried out on said replaceable working plane (21), since said working plane was replaced (21).

5. Working center (C) according to any one of the preceding claims, **characterized in that** said data relating to the actual wear of said replaceable working plane (21) comprise the measurement of the worn surface of said replaceable working plane (21).

6. Working center (C) according to any one of the preceding claims, **characterized in that** it comprises at least one optic device capable of
carrying out an initial scan of said replaceable working plane (21) and generating a corresponding three-dimensional reference map of said replaceable working plane (21), and
carrying out periodic scans of said replaceable working surface (21) and generating corresponding actual three-dimensional maps of said replaceable working plane (21).

7. Working center (C) according to the preceding claim, **characterized**
**in that** said three-dimensional reference map and said three-dimensional actual maps are stored in said storage unit (M), and
**in that** said logic control unit (U) is capable of comparing said three-dimensional actual maps with said three-dimensional reference maps.

8. Working center (C) according to any one of the preceding claims, **characterized in that** it comprises displaying means, such as a light bar, for displaying the calculated state of wear of said replaceable working plane (21).

9. Working center (C) according to any one of the preceding claims, **characterized**
**in that** it comprises a working unit (3) for carrying out the working on said pieces, and
**in that** said logic control unit (U) is configured to send said signals to said working unit (3) for carrying out the leveling and/or the replacement of said replaceable working plane (21).

10. Working center (C) according to any one of the preceding claims, **characterized**
**in that** it comprises a moving device, and
**in that** said logic control unit (U) is configured to send said signals to said moving device for carrying out the replacement of said replaceable working plane (21).

11. Working center (C) according to any one of the preceding claims, **characterized in that** said storage unit (M) is a cloud unit, that can be connected to said logic control unit (U) by means of an Internet network.

12. Operating method of a working center (C), as described in any one of the preceding claims, **characterized in that** it comprises the following steps:
a. acquiring data on the actual state of wear of said replaceable working plane (21);
b. calculating the worn surface through machining of said replaceable working plane (21) according to said data acquired in said step a. and the spatial location on said replaceable working plane (21) of the worn portions;
c. comparing said worn surface calculated in said step b. with one or more stored reference thresholds;
d. emitting signals corresponding to said comparison carried out in said step b.

13. Operating method according to the preceding claim, when said working center (C) comprises a graphic interface (I), operatively connected to said logic control unit (U), **characterized in that** it comprises the following further step:
e. sending said one or more signals emitted in said step d. to said graphic interface (I) for displaying to an operator.

14. Method according to any one of claims 12 or 13, **characterized in that** said data relating to the actual wear of said replaceable working plane (21) comprise the number of cutting schemes carried out after the leveling of said replaceable working plane (21).

15. Method according to any one of claims 12 - 14, **characterized in that** said data relating to the actual wear of said replaceable working surface (21) comprise the number of leveling carried out on said replaceable working surface (21).

16. Method according to any one of claims 12 - 15, **characterized in that** said data relating to the actual wear of said replaceable working surface (21) comprise the measurement of the worn surface of said replaceable working plane (21).

## Patentansprüche

1. Arbeitszentrum (C) zum Bearbeiten von Platten aus Holz, Keramik, Kunststoff, Glas, Glasfaser und dergleichen, umfassend
mindestens eine auswechselbare Arbeitsebene (21), eine Speichereinheit (M), in der ein oder mehrere Referenzschwellenwerte in Bezug auf den Abnutzungszustand der austauschbaren Arbeitsebene gespeichert sind (21), und Schneideschemen, die an den Platten auszuführen sind,
eine Logik-Steuereinheit (U), die betriebsmäßig mit der Speichereinheit (M) verbunden ist, wobei das Arbeitszentrum (C) **dadurch gekennzeichnet ist, dass** die Logik-Steuereinheit (U) konfiguriert ist, um:
Daten über den tatsächlichen Verschleißzustand der auswechselbaren Arbeitsfläche (21) zu erfassen,
Berechnung der durch die Bearbeitung der auswechselbaren Arbeitsebene (21) verschlissenen Oberfläche und der räumlichen Lage der verschlissenen Abschnitte auf der auswechselbaren Arbeitsebene (21) gemäß den erfassten Daten,
die berechnete abgenutzte Oberfläche mit dem einen oder den mehreren gespeicherten Referenzschwellenwerten zu vergleichen und
Signale ausgeben, die dem genannten Vergleich entsprechen.

2. Arbeitszentrum (C) nach dem vorstehenden Anspruch, gekennzeichnet
dass sie eine grafische Schnittstelle (I) umfasst, die funktionell mit der logischen Steuereinheit (U) verbunden ist, und
dass die logische Steuereinheit (U) so konfiguriert ist, dass sie die dem Vergleich entsprechenden Signale an die grafische Schnittstelle (I) sendet, um sie einem Bediener anzuzeigen.

3. Arbeitszentrum (C) nach einem der vorstehenden Ansprüche, **dadurch gekennzeichnet, dass** die Daten, die sich auf die tatsächliche Abnutzung der austauschbaren Arbeitsebene (21) beziehen, die Anzahl der nach der Nivellierung der austauschbaren Arbeitsebene (21) durchgeführten Schneidvorgänge umfassen.

4. Arbeitszentrum (C) nach einem der vorstehenden Ansprüche, **dadurch gekennzeichnet, dass** die Daten, die sich auf die tatsächliche Abnutzung der austauschbaren Arbeitsebene (21) beziehen, die Anzahl der Nivellierungen umfassen, die an der austauschbaren Arbeitsebene (21) durchgeführt wurden, seit die Arbeitsebene (21) ausgetauscht wurde.

5. Arbeitszentrum (C) nach einem der vorhergehenden Ansprüche, **dadurch gekennzeichnet, dass** die Daten bezüglich des tatsächlichen Verschleißes der auswechselbaren Bearbeitungsebene (21) die Messung der abgenutzten Oberfläche der auswechselbaren Bearbeitungsebene (21) umfassen.

6. Arbeitszentrum (C) nach einem der vorstehenden Ansprüche, **dadurch gekennzeichnet, dass** es mindestens eine optische Vorrichtung umfasst, die in der Lage ist Ausführen einer anfänglichen Abtastung der austauschbaren Arbeitsebene (21) und Erzeugen einer entsprechenden dreidimensionalen Referenzkarte der austauschbaren Arbeitsebene (21), und
Durchführung periodischer Abtastungen der austauschbaren Arbeitsfläche (21) und Erzeugung entsprechender aktueller dreidimensionaler Karten der austauschbaren Arbeitsebene (21).

7. Arbeitszentrum (C) nach dem vorstehenden Anspruch, gekennzeichnet
dass die dreidimensionale Referenzkarte und die dreidimensionalen Ist-Karten in der Speichereinheit (M) gespeichert sind, und
dass die logische Steuereinheit (U) in der Lage ist, die dreidimensionalen Ist-Karten mit den dreidimensionalen Referenzkarten zu vergleichen.

8. Arbeitszentrum (C) nach einem der vorhergehenden Ansprüche, **dadurch gekennzeichnet, dass** es Anzeigemittel, wie z.B. einen Leuchtbalken, zur Anzeige des berechneten Verschleißzustandes der auswechselbaren Arbeitsebene (21) umfasst.

9. Arbeitszentrum (C) nach einem der vorstehenden Ansprüche, gekennzeichnet
dass sie eine Bearbeitungseinheit (3) zur Durchführung der Bearbeitung der genannten Teile umfasst, und dass die logische Steuereinheit (U) so konfiguriert ist, dass sie die Signale an die Arbeitseinheit (3) sendet, um die Nivellierung und/oder den Austausch der austauschbaren Arbeitsebene (21) auszuführen.

10. Arbeitszentrum (C) nach einem der vorstehenden Ansprüche, gekennzeichnet
dass sie eine bewegliche Vorrichtung umfasst und dass die logische Steuereinheit (U) so konfiguriert ist, dass sie die Signale an die bewegliche Vorrichtung sendet, um den Austausch der austauschbaren Arbeitsebene (21) durchzuführen.

11. Arbeitszentrum (C) nach einem der vorhergehenden Ansprüche, **dadurch gekennzeichnet, dass** die Speichereinheit (M) eine Cloud-Einheit ist, die über ein Internet-Netzwerk mit der logischen Steuereinheit (U) verbunden werden kann.

12. Verfahren zum Betrieb eines Arbeitszentrums (C), wie in einem der vorhergehenden Ansprüche beschrieben, **dadurch gekennzeichnet, dass** es die folgenden Schritte umfasst:
a. Erfassen von Daten über den tatsächlichen Verschleißzustand der austauschbaren Arbeitsebene (21);
b. Berechnen der verschlissenen Oberfläche durch maschinelle Bearbeitung der auswechselbaren Arbeitsebene (21) gemäß den in Schritt a. erfassten Daten und der räumlichen Lage der verschlissenen Teile auf der auswechselbaren Arbeitsebene (21);
c. Vergleichen der in Schritt b. berechneten Wom-Oberfläche mit einem oder mehreren gespeicherten Referenzschwellenwerten;
d. Aussenden von Signalen, die dem in Schritt b durchgeführten Vergleich entsprechen.

13. Betriebsverfahren nach dem vorhergehenden Anspruch, wenn das Arbeitszentrum (C) eine graphische Schnittstelle (I) umfasst, die mit der logischen Steuereinheit (U) operativ verbunden ist, **dadurch gekennzeichnet, dass** es den folgenden weiteren Schritt umfasst:
e. Senden des einen oder der mehreren in Schritt d. ausgegebenen Signale an die grafische Schnittstelle (I) zur Anzeige an einen Bediener.

14. Verfahren nach einem der Ansprüche 12 oder 13, **dadurch gekennzeichnet, dass** die Daten, die sich auf die tatsächliche Abnutzung der austauschbaren Arbeitsebene (21) beziehen, die Anzahl der nach dem Nivellieren der austauschbaren Arbeitsebene (21) durchgeführten Schneidvorgänge umfassen.

15. Verfahren nach einem der Ansprüche 12 bis 14, **dadurch gekennzeichnet, dass** die Daten, die sich auf die tatsächliche Abnutzung der austauschbaren Arbeitsfläche (21) beziehen, die Anzahl der an der austauschbaren Arbeitsfläche (21) durchgeführten Nivellierungen umfassen.

16. Verfahren nach einem der Ansprüche 12 bis 15, **dadurch gekennzeichnet, dass** die Daten, die sich auf den tatsächlichen Verschleiß der auswechselbaren Arbeitsfläche (21) beziehen, die Messung der abgenutzten Oberfläche der auswechselbaren Arbeitsfläche (21) umfassen.

## Revendications

1. Centre de travail (C) pour l'usinage de panneaux en bois, céramique, plastique, verre, fibre de verre et similaires, comprenant
au moins un plan de travail remplaçable (21),
une unité de stockage (M), dans laquelle sont stockés un ou plusieurs seuils de référence relatifs à l'état d'usure dudit plan de travail remplaçable (21), et des schémas de coupe à réaliser sur lesdits panneaux,
une unité de commande logique (U) reliée de manière opérationnelle à ladite unité de stockage (M), ledit centre de travail (C) étant **caractérisé en ce que** ladite unité de commande logique (U) est configurée pour:
acquérir des données relatives à l'état réel d'usure dudit plan de travail remplaçable (21),
calculer la surface usée par l'usinage dudit plan de travail remplaçable (21) et l'emplacement spatial sur ledit plan de travail remplaçable (21) des parties usées en fonction desdites données acquises,
comparer ladite surface usée calculée à un ou plusieurs seuils de référence stockés, et
émettre des signaux correspondant à cette comparaison.

2. Centre de travail (C) selon la revendication précédente, **caractérisé**
**en ce qu'**il comprend une interface graphique (I), reliée de manière opérationnelle à ladite unité de commande logique (U), et
**en ce que** ladite unité de commande logique (U) est configurée pour envoyer lesdits signaux correspondant à ladite comparaison à ladite interface graphique (I), pour affichage à un opérateur.

3. Centre de travail (C) selon l'une quelconque des revendications précédentes, **caractérisé par le fait que** lesdites données relatives à l'usure réelle dudit plan de travail remplaçable (21) comprennent le nombre de plans de coupe effectués après le nivellement dudit plan de travail remplaçable (21).

4. Centre de travail (C) selon l'une quelconque des revendications précédentes, **caractérisé en ce que** lesdites données relatives à l'usure réelle dudit plan de travail remplaçable (21) comprennent le nombre de nivellements effectués sur ledit plan de travail remplaçable (21), depuis que ledit plan de travail a été remplacé (21).

5. Centre de travail (C) selon l'une quelconque des revendications précédentes, **caractérisé en ce que** lesdites données relatives à l'usure réelle dudit plan de travail remplaçable (21) comprennent la mesure de la surface usée dudit plan de travail remplaçable (21).

6. Centre de travail (C) selon l'une quelconque des revendications précédentes, **caractérisé en ce qu'**il comprend au moins un dispositif optique capable de effectuer un balayage initial dudit plan de travail remplaçable (21) et générer une carte de référence tridimensionnelle correspondante dudit plan de travail remplaçable (21), et
effectuer des balayages périodiques de ladite surface de travail remplaçable (21) et générer des cartes tridimensionnelles réelles correspondantes de ladite surface de travail remplaçable (21).

7. Centre de travail (C) selon la revendication précédente, **caractérisé**
**en ce que** ladite carte de référence tridimensionnelle et lesdites cartes réelles tridimensionnelles sont stockées dans ladite unité de stockage (M), et
**en ce que** ladite unité de commande logique (U) est capable de comparer lesdites cartes réelles tridimensionnelles avec lesdites cartes de référence tridimensionnelles.

8. Centre de travail (C) selon l'une quelconque des revendications précédentes, **caractérisé en ce qu'**il comporte des moyens d'affichage, tels qu'une barre lumineuse, pour afficher l'état d'usure calculé dudit plan de travail remplaçable (21).

9. Centre de travail (C) selon l'une quelconque des revendications précédentes, **caractérisé en ce qu'**il comprend une unité de travail (3) pour effectuer le travail sur lesdites pièces, et
**en ce que** ladite unité de commande logique (U) est configurée pour envoyer lesdits signaux à ladite unité de travail (3) pour effectuer le nivellement et/ou le remplacement dudit plan de travail remplaçable (21).

10. Centre de travail (C) selon l'une quelconque des revendications précédentes, **caractérisé en ce qu'**il comprend un dispositif mobile, et
**en ce que** ladite unité de commande logique (U) est configurée pour envoyer lesdits signaux audit dispositif de déplacement afin d'effectuer le remplacement dudit plan de travail remplaçable (21).

11. Centre de travail (C) selon l'une quelconque des revendications précédentes, **caractérisé par le fait que** ladite unité de stockage (M) est une unité en nuage, qui peut être connectée à ladite unité de commande logique (U) au moyen d'un réseau Internet.

12. Procédé de fonctionnement d'un centre de travail (C), tel que décrit dans l'une quelconque des revendications précédentes, **caractérisé en ce qu'**il comprend les étapes suivantes:
a. acquérir des données sur l'état réel d'usure dudit plan de travail remplaçable (21);
b. calculer la surface usée par usinage dudit plan de travail remplaçable (21) en fonction des données acquises dans ladite étape a. et de la localisation spatiale sur ledit plan de travail remplaçable (21) des parties usées;
c. comparer la surface de la femme calculée à l'étape b. à un ou plusieurs seuils de référence enregistrés;
d. émettre des signaux correspondant à la comparaison effectuée à l'étape b.

13. Procédé de fonctionnement selon la revendication précédente, lorsque ledit centre de travail (C) comprend une interface graphique (I), reliée de manière opérationnelle à ladite unité de commande logique (U), **caractérisé en ce qu'**il comprend l'étape supplémentaire suivante:
e. envoyer le ou les signaux émis à l'étape d. à l'interface graphique (I) pour qu'ils soient affichés à l'intention d'un opérateur.

14. Procédé selon l'une quelconque des revendications 12 ou 13, **caractérisé en ce que** lesdites données relatives à l'usure réelle dudit plan de travail remplaçable (21) comprennent le nombre de plans de coupe effectués après la mise à niveau dudit plan de travail remplaçable (21).

15. Procédé selon l'une quelconque des revendications 12 à 14, **caractérisé en ce que** lesdites données relatives à l'usure réelle de ladite surface de travail remplaçable (21) comprennent le nombre de nivellements effectués sur ladite surface de travail remplaçable (21).

16. Procédé selon l'une quelconque des revendications 12 à 15, **caractérisé en ce que** lesdites données relatives à l'usure réelle de ladite surface de travail remplaçable (21) comprennent la mesure de la surface usée dudit plan de travail remplaçable (21).
